# NEUE EUROPÄISCHE PATENTSCHRIFT

(11) **EP 1 814 754 B2**
(45) Veröffentlichungstag und Bekanntmachung des Hinweises auf die Entscheidung über den Einspruch: **30.08.2017**
(45) Hinweis auf die Patenterteilung: 26.03.2014
(21) Anmeldenummer: 05802049.6
(22) Anmeldetag: 19.10.2005
(51) Int. Cl.: B60K 6/48

(54) **VERFAHREN ZUR STEUERUNG EINES BETRIEBS EINES HYBRIDKRAFTFAHRZEUGS SOWIE HYBRIDFAHRZEUG**
METHOD FOR CONTROLLING AN OPERATION OF A HYBRID MOTOR VEHICLE AND HYBRID VEHICLE
PROCEDE POUR ASSURER LA COMMANDE D'EXPLOITATION D'UNE AUTOMOBILE HYBRIDE ET VEHICULE HYBRIDE CORRESPONDANT

(30) Priorität: 16.11.2004 DE 102004055128
(43) Veröffentlichungstag der Anmeldung: 08.08.2007
(73) Patentinhaber: Volkswagen Aktiengesellschaft, 38440 Wolfsburg (DE); Skoda Auto a.s., 293 60 Mlada Boleslav (CZ)
(72) Erfinder: ZILLMER, Michael, 38173 Sickte (DE); HOLZ, Matthias, 38165 Lehre (DE); POTT, Ekkehard, 38518 Gifhorn (DE); PROCHAZKA, David, 50745 Libosovice (CZ)
(74) Vertreter: Gulde & Partner
(86) Internationale Anmeldenummer: PCT/EP2005/011372
(87) Internationale Veröffentlichungsnummer: WO 2006/053624

(56) Entgegenhaltungen:
- EP-A- 1 090 803
- EP-A- 1 283 122
- DE-A1- 10 200 120
- DE-A1- 10 318 882
- DE-A1- 19 749 548
- US-A- 5 786 640
- US-A1- 2001 020 833
- US-A1- 2002 038 733
- US-A1- 2002 062 183
- US-B1- 6 258 008
- US-B1- 6 333 612
- US-B1- 6 369 539
- US-B1- 6 484 833

## Beschreibung

Die Erfindung betrifft ein Verfahren zur Steuerung eines Betriebs eines Kraftfahrzeugs mit einer Hybridantriebseinheit, die einen Verbrennungsmotor und zusätzlich mindestens eine, wahlweise in einen motorischen oder generatorischen Betrieb schaltbare elektrische Maschine umfasst, wobei die elektrische Maschine im generatorischen Betrieb beispielsweise ein elektrisches Bordnetz des Fahrzeugs versorgt und/oder einen Energiespeicher lädt. Die Erfindung betrifft ferner ein Hybridfahrzeug mit einer entsprechenden Steuerung.

Der Begriff Hybridfahrzeug bezeichnet Kraftfahrzeuge, bei denen mindestens zwei Antriebseinheiten miteinander kombiniert werden, die auf unterschiedliche Energiequellen zurückgreifen, um die Leistung für den Fahrzeugantrieb bereitzustellen. Besonders vorteilhaft ergänzen sich die Eigenschaften eines Verbrennungsmotors, der durch die Verbrennung von Benzin- oder Dieselkraftstoffen kinetische Energie erzeugt, und einer Elektromaschine, die elektrische Energie in Bewegungsenergie umsetzt. Heutige Hybridfahrzeuge sind deshalb überwiegend mit einer Kombination aus Verbrennungsmotor und einer oder mehreren elektrischen Maschinen ausgestattet. Es lassen sich zwei verschiedene Hybridkonzepte unterscheiden. Bei den so genannten seriellen oder sequentiellen Hybridkonzepten erfolgt der Fahrzeugantrieb ausschließlich über die elektrische Maschine, während der Verbrennungsmotor über einen separaten Generator den elektrischen Strom für die Aufladung eines, die E-Maschine speisenden Energiespeichers beziehungsweise für die direkte Speisung der E-Maschine erzeugt. Demgegenüber werden heute zumindest in PKW-Anwendungen parallele Hybridkonzepte bevorzugt, bei denen der Fahrzeugantrieb sowohl durch den Verbrennungsmotor als auch durch die E-Maschine dargestellt werden kann.

Die in solchen Parallelkonzepten eingesetzten elektrischen Maschinen lassen sich wahlweise motorisch oder generatorisch betreiben. So wird etwa die E-Maschine im motorischen Betrieb typischerweise in Betriebspunkten mit höheren Fahrzeuglasten unterstützend zum Verbrennungsmotor zugeschaltet. Zudem kann sie die Funktion eines Anlassermotors für den Verbrennungsmotor übernehmen. Demgegenüber wird die E-Maschine im verbrennungsmotorischen Fahrantrieb überwiegend generatorisch betrieben, wobei eine so erzeugte elektrische Leistung der E-Maschine beispielsweise zur Aufladung des Energiespeichers und/oder zur Versorgung eines elektrischen Bordnetzes genutzt wird. Im Falle eines leistungsverzweigten Hybridkonzepts mit mehr als einer E-Maschine kann der generatorische Betrieb einer E-Maschine auch zur Speisung einer weiteren genutzt werden. Ferner wird in der Regel zumindest ein Teil einer Bremsleistung durch die generatorisch gefahrene E-Maschine aufgebracht (Rekuperation), wobei ein Teil der mechanischen Verlustenergie in elektrische Energie umgewandelt wird. Dabei ist in Hybridkonzepten generell von Vorteil, dass die E-Maschinen gegenüber konventionellen Klauenpolgeneratoren mit besseren Wirkungsgraden arbeiten.

Als E-Maschinentypen kommen heute vorzugsweise Asynchronmaschinen (ASM) oder permanent erregte Synchronmaschinen (PSM) zum Einsatz. Ungünstig bei sämtlichen Typen ist ihr deutlicher Wirkungsgradabfall bei sehr geringen Momentenanforderungen, das heißt bei kleinen abgegebenen elektrischen Leistungen. Dies hat zur Folge, dass bei relativ geringer elektrischen Last unverhältnismäßig viel mechanische Energie und damit Kraftstoff durch den Verbrennungsmotor aufgebracht werden muss, um die geforderte elektrische Leistung durch die E-Maschine zu erzeugen. Der nächstliegende bekanntgewordene Stand der Technik ist der US 6 369 539 zu entnehmen.

Aufgabe der vorliegenden Erfindung ist es, ein Verfahren zur Steuerung eines Hybridfahrzeugs vorzuschlagen, das eine effektivere und im Ergebnis Kraftstoff sparende Nutzung der elektrische(n) Maschine(n) in einem parallelen Hybridkonzept erlaubt.

Diese Aufgabe wird durch ein Verfahren sowie ein Kraftfahrzeug mit den Merkmalen der unabhängigen Ansprüche 1 und 6 gelöst. Erfindungsgemäß ist vorgesehen, dass in Abhängigkeit von der Einhaltung vorgegebener Randbedingungen die Betreibung der elektrischen Maschine im generatorischen Betrieb in einem Pulsladebetrieb mit alternierenden Intervallen oder in einem kontinuierlichen generatorischen Betrieb erfolgt, wobei im Pulsladebetrieb
(a) in einem ersten Intervall die elektrische Maschine mit einer ersten, hohen elektrischen Leistungsabgabe betrieben wird, die größer als eine aktuelle Leistungsaufnahme des elektrischen Bordnetzes des Kraftfahrzeugs ist, wobei die überschüssige elektrische Leistung zur Aufladung des Energiespeichers verwendet wird, und
(b) in einem zweiten Intervall ausgeschaltet wird; und
wobei vor und während des Pulsladebetriebs eine Wirkungsgradbilanzierung durchgeführt wird, in welcher eine Lastpunktverschiebung des Verbrennungsmotors berücksichtigt wird, welche zur Kompensation einer Lastpunktverschiebung der elektrischen Maschine zwischen dem kontinuierlichen generatorischen Betrieb und dem alternierenden Pulsladebetrieb erfolgt, und der Pulsladebetrieb der elektrischen Maschine nur dann und so lange angewendet wird, wenn ein so ermittelter Wirkungsgradvorteil des alternierenden Betriebs gegenüber dem kontinuierlichen generatorischen Betrieb einen Schwellenwert überschreitet.

Durch die alternierende Betreibung der elektrischen Maschinen einerseits mit einer elektrischen Leistungsabgabe, die deutlich höher als eine aktuell vom elektrischen Bordnetz (und eventuell vom Energiespeicher zu seiner Aufladung auf einen vorgegebenen Ladezustand) angeforderte Leistung ist, und andererseits in dazwischenliegenden Intervallen im vollständig ausgeschalteten Zustand, wird das Anfahren von zwischen diesen Extremen liegenden Lastpunkten mit ungünstigen Wirkungsgraden weitgehend vermieden. Somit wird der Gesamtwirkungsgrad der elektrischen Maschine sowie des gesamten Hybridaggregats gegenüber dem Stand der Technik deutlich verbessert und der Kraftstoffverbrauch verringert. Dabei kann - je nach Bedarf - die im ersten Intervall durch die E-Maschine bereitgestellte hohe elektrische Leistung genutzt werden, um den elektrischen Energiespeicher (auf seinen Soll-Ladezustand eventuell plus einen Pufferbetrag) zu laden und/oder andererseits zur Versorgung des elektrischen Bordnetzes des Kraftfahrzeugs, worunter sowohl die von den elektrischen Verbrauchern aufgenommene Leistung als auch die zur Ladung einer optional vorhandenen Pufferbatterie (typischerweise eine 12V-Fahrzeugbatterie) verstanden wird. Demgegenüber erfolgt die Versorgung des elektrischen Bordnetzes im zweiten Intervall im Wesentlichen aus dem im ersten Intervall aufgefüllten Energiespeicher (und gegebenenfalls aus der Fahrzeugbatterie).

Gemäß einer bevorzugten Ausführungsform der Erfindung erfolgt die Umschaltung zwischen den Intervallen des generatorischen Betriebs in Abhängigkeit von vorgegebenen Schwellenwerten für einen Ladezustand des Energiespeichers der elektrischen Maschine. Dabei wird insbesondere das erste Intervall beendet, wenn der Ladezustand des Energiespeichers eine obere Umschaltschwelle erreicht, wohingegen das zweite Intervall (ausgeschaltete E-Maschine) beendet wird, wenn der Ladezustand des Energiespeichers eine untere Umschaltschwelle erreicht. Auf diese Weise oszilliert der Ladezustand des Energiespeichers um einen Soll-Ladezustand. Der obere und der untere Schwellenwert können mit einem gleichen oder unterschiedlichen Abstand zu dem Soll-Ladezustand vorgegeben werden. Der Soll-Ladezustand seinerseits wird betriebspunktabhängig sowie in Abhängigkeit von der Energiespeichergröße und dem Energiespeichertyp als Kompromiss zwischen Rekuperationspotential, Boostpotential, Energiespeicherlebensdauer und Kaltstartsicherheit berechnet.

Erfindungsgemäß wird der alternierende Pulsladebetrieb der E-Maschine von einer Wirkungsgradbilanzierung abhängig gemacht, die vor und während des alternierenden Betriebs durchgeführt wird. Dabei wird der erfindungsgemäße alternierende Betrieb nur dann (und so lange) durchgeführt, wenn die Bilanzierung ergibt, dass ein Schwellenwert für einen zu erzielenden Wirkungsgradvorteil gegenüber dem konventionellen kontinuierlichen Betrieb erreicht oder überschritten wird. In die Bilanzierung wird auch eine Lastpunktverschiebung des Verbrennungsmotors berücksichtigt, die zur Kompensation des mit der Lastpunktverschiebung der E-Maschine entstehenden höheren Antriebsmomentes des Verbrennungsmotors erfolgt.

Es ist ferner bevorzugt vorgesehen, dass die durch das erfindungsgemäße Pulsladeverfahren hervorgerufenen Momentenänderungen durch den Verbrennungsmotor kompensiert werden, insbesondere in Form einer Erhöhung der Zylinderfüllung, um nachteilige Auswirkungen auf das Fahrverhalten zu vermeiden.

Aus momentenkompensatorischen Gründen kann es sinnvoll sein, die maximale generatorische Leistung der elektrischen Maschine während des ersten Intervalls (das heißt während der Pulsladung) auf einen Maximalwert zu begrenzen.

Die Erfindung betrifft ferner ein Kraftfahrzeug mit Hybridantrieb, welches Steuermittel umfasst, mit denen der erfindungsgemäße alternierende generatorische Betrieb der elektrischen Maschine entsprechend den vorstehenden Ausführungen steuerbar ist. Die erfindungsgemäßen Steuermittel umfassen insbesondere einen Programmalgorithmus zur Steuerung des erfindungsgemäßen Pulsladebetriebs, der in einer allgemeinen Motorsteuerung oder einer separaten Steuereinheit hinterlegt sein kann.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch den Aufbau einer erfindungsgemäßen Hybridantriebseinheit;
- Figur 2: ein generatorisches Wirkungsgradkennfeld einer Asynchronmaschine;
- Figur 3: ein generatorisches Wirkungsgradkennfeld einer permanent erregten Synchronmaschine und
- Figur 4: zeitliche Verläufe eines Energiespeicher-Ladezustands, eines generatorischen Moments und einer Fahrzeuggeschwindigkeit während eines herkömmlich kontinuierlichen und eines erfindungsgemäß diskontinuierlichen, generatorischen Betriebs einer elektrischen Maschine.

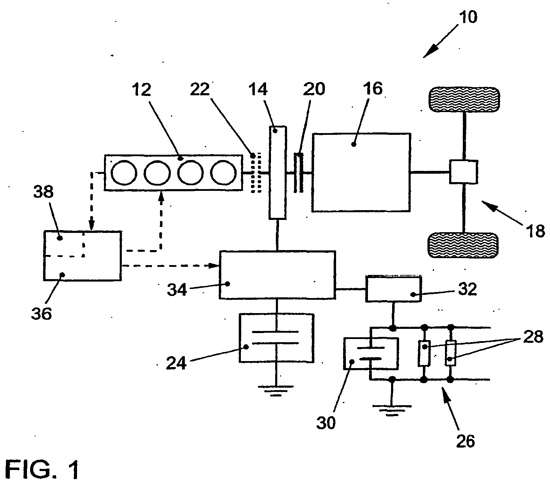

In Figur 1 ist mit 10 insgesamt eine parallele Hybridantriebseinheit eines im Einzelnen nicht weiter dargestellten Hybridfahrzeugs bezeichnet. Der Antrieb des Fahrzeugs erfolgt wahlweise oder gleichzeitig durch einen konventionellen Verbrennungsmotor 12 (Otto- oder Dieselmotor) sowie eine elektrische Maschine (E-Maschine) 14, die beide auf die gleiche Welle wirken, insbesondere auf die Kurbelwelle des Verbrennungsmotors 12. Die Anbindung der E-Maschine 14 an die Motorkurbelwelle kann auf verschiedene Weise erfolgen. So kann die E-Maschine 14 direkt oder über eine Kupplung mit der Kurbelwelle verbunden sein oder über einen Riemenantrieb, einen Zahnriemen, ein Getriebe oder einer anderen kraft- und/oder formschlüssigen Verbindung. Verbrennungsmotor 12 und E-Maschine 14 sind über ein automatisches oder Handschalt-Getriebe 16 mit einem angedeuteten Antriebsstrang 18 verbunden. Die Entkopplung der Antriebswellen des Verbrennungsmotors 12 beziehungsweise der E-Maschine 14 vom Getriebe 16 erfolgt über eine Kupplung 20, die durch Betätigung eines nicht dargestellten Kupplungspedals durch den Fahrer geöffnet werden kann und bei NichtBetätigung geschlossen ist.

In Figur 1 ist zudem eine optionale, zwischen Verbrennungsmotor 12 und E-Maschine 14 angeordnete zusätzliche Kupplung 22 angedeutet. Eine solche zusätzliche Kupplung 22 erlaubt die separate Abkopplung des Verbrennungsmotors 12 vom Antriebsstrang 18 beziehungsweise von der E-Maschine 14, wodurch sich grundsätzlich der Vorteil ergibt, dass bei ausgeschaltetem Verbrennungsmotor 12 seine mechanischen Reibungswiderstände nicht mitgeschleppt werden müssen. Die zusätzliche Kupplung 22 bewirkt daher zwar ein zusätzliches Einsparpotential von Kraftstoff, ist jedoch mit einem erheblichen Kosten-, Konstruktions- und Bauraumaufwand verbunden. Im Rahmen der vorliegenden Erfindung ist aus diesem Grund die zusätzliche Kupplung 22 zwischen Verbrennungsmotor 12 und E-Maschine 14 zwar grundsätzlich denkbar, bevorzugt jedoch nicht vorgesehen.

Die E-Maschine 14, die beispielsweise ein Drehstrom-Asynchronmotor oder -Synchronmotor sein kann, kann wahlweise im Motor- oder Generatorbetrieb betrieben werden. Im motorischen Betrieb treibt die E-Maschine 14 den Antriebsstrang 18 unter Verbrauch von elektrischer Energie (Strom) an, die diese aus einem Energiespeicher 24 bezieht. Da im erfindungsgemäßen Verfahren in der gesamten Wirkungsgradbetrachtung auch Wirkungsgradverluste bei Ein- und Ausspeichervorgängen berücksichtigt werden müssen, werden grundsätzlich solche Speichertypen bevorzugt, die bei diesen Vorgängen hohe Wirkungsgrade aufweisen. Insbesondere werden bevorzugt Kondensatorspeicher eingesetzt, die gegenüber Batterien (beispielsweise Blei-Säure-, Nickel-Metallhydrid- oder Lithium-Ionen-Batterien) deutlich höhere Ein- und Ausspeicherwirkungsgrade besitzen. Der Energiespeicher 24 kann auch ein kombiniertes System, bestehend aus einer Batterie (30 s.u.) und einem parallelgeschalteten Kondensatorspeicher, sein, wobei vorzugsweise der Kondensatorspeicher den Großteil der zyklischen Ein- und Ausspeichervorgänge übernimmt. Zusätzlich kann der Motorbetrieb der E-Maschine 14 den angeschalteten Verbrennungsmotor 12 beispielsweise zur schnellen Darstellung hoher Drehmomente unterstützen.

Im generatorischen Betrieb hingegen wird die E-Maschine 14 durch den Verbrennungsmotor 12 beziehungsweise einen Schub des Fahrzeuges angetrieben und wandelt die kinetische Energie in elektrische Energie zur Auffüllung des Energiespeichers 24 sowie zur Versorgung eines mit 26 angedeuteten Bordnetzes des Fahrzeugs um. Das Bordnetz 26 umfasst eine Vielzahl elektrischer Verbraucher 28 und kann optional noch eine Pufferbatterie 30, in der Regel eine übliche 12V-Fahrzeugbatterie, enthalten. Ein zwischengeschalteter DC/DC-Wandler 32 regelt die generatorisch erzeugte Energie der E-Maschine 14 auf die für das Bordnetz 26 erforderliche Spannung von 12 V herunter.

Die Umschaltung des Elektromotors 14 zwischen Motor- und Generatorbetrieb erfolgt durch eine Leistungselektronik 34, die mittels eines integrierten Wechselrichters gleichzeitig eine - je nach Typ der elektrischen Maschine - möglicherweise erforderliche Umrichtung zwischen Gleich- und Wechselstrom vornimmt. Die Leistungselektronik 34 übernimmt ferner eine Drehzahl- und/oder Drehmomentregelung der E-Maschine 14 im motorischen Betrieb beziehungsweise eine Regelung der erzeugten elektrischen Leistung im generatorischen Betrieb. Zu diesen Zwecken wird etwa eine Umlaufgeschwindigkeit des Ständerdrehfeldes (bei Drehstrommaschinen) verändert oder durch Beeinflussung der Erregungsspannung beziehungsweise Erregungsstromstärke eine Magnetfeldstärke verändert. Die diesbezüglich möglichen Stellgrößen sind wiederum vom Maschinentyp abhängig. Insbesondere kann mithilfe eines Frequenzumrichters die Statorspannung und -frequenz eines Asynchronmotors stufenlos verändert werden, um bei gegebener Drehzahl die abgegebene generatorische Leistung zu verändern.

Gemäß dem dargestellten Konzept erfolgt der Fahrzeugantrieb überwiegend durch den Verbrennungsmotor 12, der durch den als Startergenerator ausgelegten Elektromotor 14 gestartet wird. Der Elektromotor 14 übernimmt zudem eine Boostfunktion, indem er in Hochlastsituationen, insbesondere bei Beschleunigungen des Fahrzeugs, unterstützend zum Fahrzeugantrieb zugeschaltet wird (motorischer Betrieb). Andererseits hat der Elektromotor 14 in Fahrsituationen, bei denen ein Überschuss kinetischer Energie des Fahrzeugs vorliegt, eine so genannte Rekuperationsfunktion, indem er im generatorischen Betrieb die Bewegungsenergie in kinetische Energie zur Ladung des Energiespeichers 24 umwandelt und somit gleichzeitig ein Bremsmoment bereitstellt.

Die erfindungsgemäße Steuerung der elektrischen Maschine entfaltet ihre Vorteile besonders in so genannten Mild-Hybridfahrzeugen. Dies sind Hybridfahrzeuge mit Elektromotoren mit relativ niedrigen Leistungen von höchstens 25 kW, insbesondere von höchstens 205 kW, in der Regel von höchstens 15 kW. Im Rahmen der vorliegenden Erfindung werden Elektromotoren mit einer Leistung vorzugsweise im Bereich von 7 bis 20 kW, besonders bevorzugt von etwa 15 kW eingesetzt.

Die Steuerung des Betriebes des Verbrennungsmotors 12 sowie der Leistungselektronik 34 erfolgt durch ein Motorsteuergerät 36, in welches eine Steuerung (angedeutet mit 38) in Form eines Programmalgorithmus integriert ist, mit welcher der nachfolgend beschriebene erfindungsgemäße Betrieb der E-Maschine 14 in einem alternierenden Generatorbetrieb (Pulsladebetrieb) durchführbar ist. Alternativ kann die Steuerung 38 auch in einer separaten Steuereinheit vorgesehen sein.

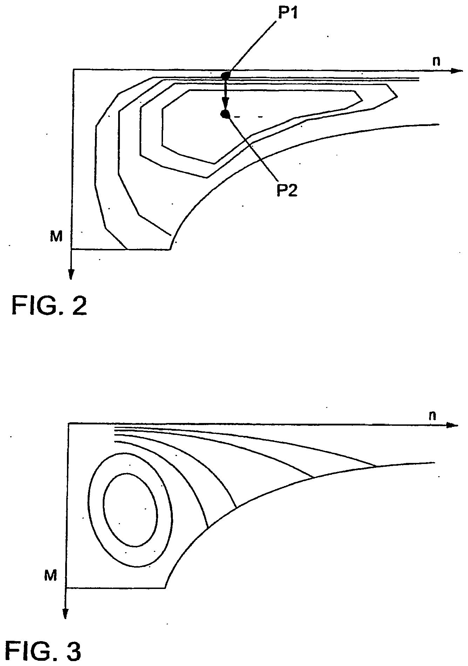

Die Figuren 2 und 3 zeigen generatorische Wirkungsgradkennfelder einer Asynchronmaschine (Figur 2) beziehungsweise einer permanent erregten Synchronmaschine (Figur 3) in Abhängigkeit von der Motordrehzahl n sowie dem generatorisch erzeugten Moment M. Das (negative) Generatormoment M ist äquivalent mit einer generatorisch erzeugten elektrischen Leistung der E-Maschine 14 beziehungsweise eines auf die Kurbelwelle ausgeübten Bremsmomentes. In den Darstellungen sind Punkte gleichen Wirkungsgrades durch die Kennlinien veranschaulicht. Dabei entsprechen die innen liegenden geschlossenen Kennlinien höheren Wirkungsgradbereichen, die nach außen abnehmen.

Die permanent erregte Synchronmaschine (Figur 3) weist typischerweise in einem begrenzten Kennfeldbereich sehr hohe Wirkungsgrade auf, die bei höheren Drehzahlen stark abfallen. Demgegenüber verdeutlicht Figur 2, dass die Asynchronmaschine in der Regel zwar etwas geringere Spitzenwirkungsgrade, dafür aber relativ hohe Wirkungsgrade auch bei hohen Drehzahlen aufweist. Beiden Maschinentypen ist gemeinsam, dass bei sehr geringen Momentenanforderungen und entsprechend kleinen elektrischen Leistungen die Wirkungsgrade deutlich abfallen, das heißt relativ viel kinetische Energie für relativ wenig generatorisch erzeugte Leistung verbraucht wird. Hinzu kommt im Falle der Synchronmaschine aufgrund ihres Dauermagnetfelds ein Restbremsmoment beziehungsweise ein Restmoment der elektrischen Leistung, selbst wenn keine Momentenanforderung an die Maschine besteht. Demgegenüber kann die Asynchronmaschine bei einer Null-Leistungsanforderung komplett magnetisch entregt und damit praktisch verlustfrei abgeschaltet werden. Aufgrund dieser Eigenschaft kommt die vorteilhafte Wirkung des erfindungsgemäßen Verfahrens bei der Asynchronmaschine besonders wirksam zum Tragen. Jedoch ist das erfindungsgemäße Verfahren grundsätzlich bei allen E-Maschinentypen anwendbar, vorzugsweise solchen, die sich bei einer Null-Leistungsanforderung nahezu verlustfrei abschalten lassen.

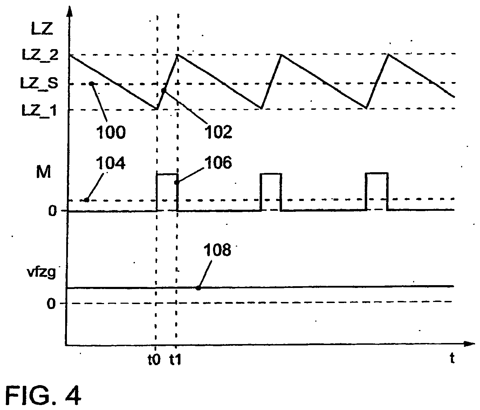

Das Prinzip des erfindungsgemäßen Verfahrens wird besonders anhand von Figur 4 deutlich. Hierin verdeutlichen die Graphen 100 und 102 die zeitlichen Verläufe eines Ladezustandes LZ des Energiespeichers 24 bei einem herkömmlichen kontinuierlichen Generatorbetrieb beziehungsweise bei einem alternierenden (gepulsten) Generatorbetrieb gemäß der vorliegenden Erfindung. Die Graphen 104 und 106 verdeutlichen die zeitlichen Verläufe eines von der elektrischen Maschine 14 generatorisch erzeugten negativen Momentes M (Bremsmoment), das gleichbedeutend mit einer gelieferten elektrischen Leistung ist, gemäß dem herkömmlichen beziehungsweise dem erfindungsgemäßen Verfahren. Im unteren Teil der Figur ist der Verlauf der Fahrzeuggeschwindigkeit vfzg dargestellt (Graph 108).

Gemäß Figur 4 wird beispielhaft eine konstante Betriebsphase des Hybridfahrzeugs - erkennbar an der konstanten Fahrzeuggeschwindigkeit vfzg - und eine aktuell gegebene, relativ geringe elektrische Leistungsaufnahme des Bordnetzes 26 vorausgesetzt. In dieser Situation wird entsprechend der herkömmlichen Vorgehensweise die E-Maschine 14 generatorisch mit einem konstanten, geringen Moment betrieben (Graph 104). Dieses Moment entspricht einer elektrischen Leistung gemäß dem aktuellen Bordnetzbedarf, wobei elektrische Verluste durch die elektrischen Leitungen und Spannungswandlung in Form eines der Leistung aufzuschlagenden Deltawertes berücksichtigt werden. Währenddessen befindet sich der Energiespeicher 24 konstant auf seinem Soll-Ladezustand LZ_S (Graph 100), da die gesamte elektrische Leistungsanforderung des Bordnetzes 26 durch die generatorisch erzeugte Leistung aufgebracht wird (Graph 104). Dieser Betriebspunkt der elektrischen Maschine 14 mit einer geringen elektrischen Leistungsabgabe bei einer gegebenen Drehzahl n ist in Figur 2 beispielhaft durch den Punkt P1 verdeutlicht. Aufgrund des geringen generatorischen Moments beziehungsweise der geringen generatorischen Leistung arbeitet die E-Maschine 14 mit nur einem geringen Wirkungsgrad, so dass die über die Kurbelwelle aufgenommene mechanische Leistung im Verhältnis zur generatorisch gewonnenen elektrischen Leistung relativ hoch ist und den Kraftstoffverbrauch des Verbrennungsmotors 12 entsprechend belastet.

In einer solchen Betriebssituation wird die E-Maschine 14 in Kombination mit dem elektrischen Energiespeicher 24 gemäß dem erfindungsgemäßen Verfahren mit einer Pulsladung betrieben, wobei bewusst eine Abweichung des Ladezustandes LZ vom Soll-Ladezustand LZ_S zugelassen wird. Dabei wird gemäß Figur 4 (Graph 102) zunächst das Bordnetz 26 ausschließlich aus dem Energiespeicher 24 (und gegebenenfalls der Pufferbatterie 30) versorgt. Dies erfolgt so lange, bis der Ladezustand LZ des elektrischen Energiespeichers 24 zum Zeitpunkt t0 eine untere Umschaltschwelle LZ_1 erreicht. Währenddessen ist die E-Maschine 14 in dieser anfänglichen Phase vollständig abgeschaltet, so dass sie kein Moment beziehungsweise keine elektrische Leistung erzeugt (Graph 106). Beim Erreichen der unteren Umschaltschwelle LZ_1 zum Zeitpunkt t0 wird die E-Maschine 14 in ihren generatorischen Betrieb geschaltet und zwar mit einem gegenüber dem herkömmlichen Verfahren deutlich höheren Moment M beziehungsweise einer deutlich höheren elektrischen Leistung. In diesem Intervall erfolgt die Versorgung des Bordnetzes 26 sowie die Ladung des Energiespeichers 24 durch die abgegebene elektrische Leistung der E-Maschine 14, was durch einen steilen Anstieg des Ladezustandes LZ ersichtlich ist. Der Lastpunkt in dieser Phase ist in Figur 2 durch den Punkt P2 gekennzeichnet und liegt bei deutlich höheren generatorischen Momenten gegenüber dem herkömmlichen Verfahren. Es wird ersichtlich, dass die Lastpunktverschiebung in diesem Intervall mit einer deutlichen Wirkungsgradverbesserung einhergeht. Der generatorische Betrieb der E-Maschine 14 wird beibehalten, bis der Ladezustand LZ zum Zeitpunkt t1 eine obere Umschaltschwelle LZ_2 erreicht. Zu diesem Zeitpunkt wird die E-Maschine 14 wieder abgeschaltet und es setzt die weitere Bordnetzversorgung ausschließlich aus dem Energiespeicher 24 verbundenen mit einem Abfall des Ladezustandes LZ ein.

Die untere sowie die obere Umschaltschwelle LZ_1, LZ_2 weisen einen Abstand unterhalb beziehungsweise oberhalb des Soll-Ladezustandes LZ_S des Energiespeichers 24 von höchstens 20 %, insbesondere höchstens 10 % und vorzugsweise höchstens von 5 % bezogen auf einen maximalen Ladezustand des Energiespeichers 24 von 100 % auf. Beispielsweise oszilliert bei einem Abstand der Umschaltschwellen von 5 % gegenüber einem Soll-Ladezustand von 70 % der Ladezustand LZ des Energiespeichers 24 im alternierenden Generatorbetrieb zwischen 65 % (LZ_1) und 75 % (LZ_2). Es ist jedoch auch denkbar, die obere und untere Umschaltschwelle unabhängig voneinander mit einem unterschiedlichen Abstand zum Soll-Ladezustand LZ_S vorzugeben.

Das Verfahren kann auch dann eingesetzt werden, wenn die generatorische Leistung nicht nur der Versorgung des Bordnetzes 26, sondern zusätzlich oder alternativ zur Anhebung des Ladezustandes LZ des Energiespeichers 24 auf seinen Soll-Ladezustand LZ_S genutzt wird. Voraussetzung ist jedoch stets, dass die gesamte durch Bordnetz 26 und/oder Energiespeicher 24 angeforderte Leistungsaufnahme insgesamt so gering ist, dass die E-Maschine 14 bei konstantem generatorischen Betrieb nur einen geringen Wirkungsgrad aufweist. Das erfindungsgemäße Verfahren kann somit unabhängig von einer aktuellen Bordnetzanforderung immer dann vorteilhaft eingesetzt werden, wenn von der E-Maschine 14 insgesamt generatorisch nur geringe Leistungen angefordert werden.

Das erfindungsgemäße Verfahren wird dann angewendet, wenn eine Wirkungsgradverbesserung durch den erfindungsgemäßen diskontinuierlichen Betrieb gegenüber einem kontinuierlichen Betrieb der E-Maschine 14 zu erwarten ist.

In einer weiteren Ausgestaltung des Verfahrens wird in der Steuerung 36, 38 der Soll-Ladezustand LZ_S des Energiespeichers 22 gezielt so vorgegeben, dass für die Ausführbarkeit des Verfahrens ein ausreichender Abstand zum oberen und unteren zulässigen Grenzwert eingehalten wird. Beispielsweise sollte der Soll-Ladezustand LZ_S einen Abstand von einem oberen zulässigen Ladungsgrenzwert (der in der Regel 100 % SOC beträgt) und/oder von einem unteren zulässigen Ladungsgrenzwert von höchstens 20 %, vorzugsweise höchstens 10 % und besonders bevorzugt von höchstens 5 % bezogen auf den maximalen Ladezustand des Energiespeichers 22 aufweisen. Beide Grenzwerte können auch unabhängig voneinander gewählt werden. Gemäß einer bevorzugten Ausführung kann der untere Ladungsgrenzwert dem Soll-Ladezustand LZ_S entsprechen.

Erfindungsgemäß wird vor und während des erfindungsgemäßen alternierenden Generatorbetriebs in der Motorsteuerung 36 eine Wirkungsgradbilanzierung durchgeführt und das Verfahren nur dann beziehungsweise so lange angewendet, wenn beziehungsweise wie sich durch die aktuellen Betriebsrandbedingungen ein Wirkungsgradvorteil gegenüber dem konventionellen kontinuierlichen Verfahren ergibt. Insbesondere wird eine Wirkungsgradverbesserung um mindestens 2 %, vorzugsweise um mindestens 5 % und besonders bevorzugt um mindestens 10% gegenüber der konventionellen Betriebsweise verlangt. In der Wirkungsgradbilanzierung kann vorteilhaft auch eine durch den variablen generatorischen Betrieb der E-Maschine 14 verursachte Lastpunktverschiebung des Verbrennungsmotors 12 berücksichtigt werden. Während der Verbrennungsmotor 12 typischerweise bei abgeschalteter E-Maschine 14 in einem Bereich mit einem etwas geringeren Wirkungsgrad arbeitet, liegt während des erfindungsgemäßen Pulsladebetriebs durch die Lastpunktanhebung der E-Maschine 14, das heißt dem größeren Bremsmoment, in der Regel auch eine höhere Last des Verbrennungsmotors 12 und damit ein höherer Wirkungsgrad vor. Unter Berücksichtigung der Wirkungsgradverschiebungen des Verbrennungsmotors 12 wird für die Anwendung des erfindungsgemäßen Verfahrens ein Gesamtwirkungsgradvorteil gefordert, der größer als die vorstehend genannten Werte ist. In der Wirkungsgradbilanzierung werden vorzugsweise auch die Einflüsse der durch die höheren elektrischen Leistungen leicht ansteigenden Einspeicherverluste des Energiespeichers sowie Leitungs- und Verbindungsverluste berücksichtigt.

Die vom erfindungsgemäßen Pulsladeverfahren der E-Maschine 14 hervorgerufenen Momentenänderungen werden vom Verbrennungsmotor 12 kompensiert, um nachteilige Auswirkungen auf das Fahrverhalten zu vermeiden. Da die Momentenkompensation nur mit einer begrenzten Genauigkeit und Schnelligkeit erfolgen kann, wird die Anwendung des Verfahrens vorzugsweise auf solche Betriebssituationen beschränkt, in denen die hervorgerufenen Momentenschwankungen relativ gering sind beziehungsweise gut kompensierbar sind. Hierbei ist zu berücksichtigen, dass die Höhe der Momentenschwankungen abhängig von der Änderung des Generatormoments beziehungsweise der elektrischen Leistung und beispielsweise auch von einer Triebstrangübersetzung ist. Aus diesen Gründen ist es sinnvoll, die maximale generatorische Leistung während der generatorisch gefahrenen Intervalle auf maximal 10 kW, vorzugsweise maximal 5 kW und besonders bevorzugt auf maximal 3 kW zu begrenzen. Des Weiteren ist es sinnvoll, das Verfahren in bestimmten Gängen des Getriebes 16, insbesondere im Rückwärtsgang und im ersten und zweiten Gang, nicht anzuwenden. Schließlich kann es aus den vorgenannten Gründen auch sinnvoll sein, das Verfahren nur für Fahrzeuggeschwindigkeiten oberhalb von 15 km/h, vorzugsweise oberhalb von 25 km/h und besonders bevorzugt oberhalb von 40 km/h zu aktivieren.

Um auch die erforderliche Lastpunktanhebung des Verbrennungsmotors 12 zu ermöglichen, ist es vorteilhaft, für die Aktivierung des alternierenden Generatorverfahrens einen Mindestabstand der aktuellen verbrennungsmotorischen Last zur Volllastkennlinie des Verbrennungsmotors 12 einzuhalten. Vorzugsweise wird das Verfahren nur dann zugelassen, wenn der Wert des aktuellen Verbrennungsmotormomentes maximal 90 %, insbesondere maximal 85 % und bevorzugt maximal 75 % des maximal möglichen Verbrennungsmotormomentes beträgt. Diese Vorgehensweise ist darüber hinaus auch deshalb vorteilhaft, um zu verhindern, dass eine bei heutigen Ottomotoren bei Volllast häufig einsetzende Gemischanreicherung zum Bauteileschutz vermieden wird, die mit einer Kraftstoffverbrauchserhöhung verbunden ist. Somit wird vorzugsweise das Verfahren auch dann nicht durchgeführt, wenn der Verbrennungsmotor 12 beispielsweise aus Katalysatorschutzgründen im Bauteileschutz läuft, das heißt mit einer Gemischanreicherung betrieben wird.

Der Wirkungsgradvorteil des erfindungsgemäßen Verfahrens wird nachfolgend anhand einer Beispielrechnung verdeutlicht:
In einem Hybridfahrzeug wird von dem Steuergerät 36 ein aktueller Leistungsbedarf des Bordnetzes 26 von 350 W festgestellt. Der Soll-Ladezustand LZ_S eines in diesem Beispiel eingesetzten Kondensatorspeichers 24 ist erreicht. Die E-Maschine 14 rotiert mit 3000 min⁻¹ und erzeugt dabei - unter Berücksichtigung von vorhandenen Leitungs- und Spannungswandlungsverlusten - eine elektrische Leistung von 400 W. Die E-Maschine 14 (Drehstrom-Asynchronmaschine) und ein für ihren Betrieb erforderlicher Wechselrichter arbeiten in konventioneller Betriebsweise zur Erzeugung dieser Leistung mit einem Gesamtwirkungsgrad von 60 %.

Mit dem erfindungsgemäßen diskontinuierlichen Pulsladeverfahren wird die E-Maschine 14 bis zum Erreichen der oberen Umschaltschwelle LZ_2 des Ladezustands LZ kurzzeitig mit 2 kW generatorisch betrieben, wobei neben der Versorgung des Bordnetzes 26 eine Erhöhung des Ladezustands LZ des Kondensatorspeichers 24 stattfindet. Bis zum Abfall auf die untere Umschaltschwelle LZ_1 wird die E-Maschine 14 dagegen vollständig deaktiviert. Bei einem Betrieb mit 2 kW arbeitet das System aus E-Maschine 14 und Wechselrichter mit einem Wirkungsgrad von 80 %. Da die für die Bordnetzversorgung zur Verfügung gestellte Energie während der Abschaltpausen überwiegend aus dem Kondensatorspeicher 24 zur Verfügung gestellt wird, müssen dessen Ein- und Ausspeicherwirkungsgrade berücksichtigt werden. Der in diesem Fall eingesetzte Doppelschichtkondensator weist für beide Vorgänge einen Wirkungsgrad von 95 % auf. Der Wirkungsgrad für die Bordnetzversorgung ergibt hierbei (unter Vernachlässigung der veränderten Wirkungsgrade des Verbrennungsmotors 12 während der Pulsladung) insgesamt 0,8 x 0,95 x 0,95 = 0,72, das heißt 72 %. Demnach ergibt sich durch den erfindungsgemäßen diskontinuierlichen Betrieb der E-Maschine 14 ein Wirkungsgradvorteil gegenüber dem kontinuierlichen Betrieb von + 12 %. Dieser wird bei Berücksichtigung der Lastpunktverschiebungen des Verbrennungsmotors 12 und der etwas höheren Einspeicher- und Leitungsverlusten tatsächlich zwar leicht reduziert, fällt gegenüber dem kontinuierlichen Betrieb aber immer noch signifikant aus.

### Bezugszeichenliste

- 10: Hybridantriebseinheit
- 12: Verbrennungsmotor
- 14: elektrische Maschine
- 16: Getriebe
- 18: Antriebsstrang
- 20: Kupplung
- 22: zusätzliche Kupplung
- 24: Energiespeicher
- 26: Bordnetz
- 28: elektrischer Verbraucher
- 30: Pufferbatterie
- 32: DC/DC-Wandler
- 34: Leistungselektronik
- 36: Motorsteuergerät
- 38: Steuerung

- M: Moment
- n: Drehzahl
- LZ: Ladezustand des Energiespeichers
- LZ_S: Soll-Ladezustand
- LZ_1: untere Umschaltschwelle für den Ladezustand
- LZ_2: obere Umschaltschwelle für den Ladezustand
- vfzg: Fahrzeuggeschwindigkeit

## Patentansprüche

1. Verfahren zur Steuerung eines Betriebs eines Kraftfahrzeugs mit einer Hybridantriebseinheit (10), welche einen Verbrennungsmotor (12) sowie mindestens eine, wahlweise motorisch oder generatorisch betreibbare elektrische Maschine (14) umfasst, wobei die elektrische Maschine (14) im generatorischen Betrieb einen Energiespeicher (24) lädt und/oder ein elektrisches Bordnetz (26) des Kraftfahrzeugs versorgt, **dadurch gekennzeichnet, dass** im generatorischen Betrieb in Abhängigkeit von vorgegebenen Randbedingungen die Betreibung der elektrischen Maschine (14) in einem Pulsladebetrieb mit alternierenden Intervallen oder in einem kontinuierlichen generatorischen Betrieb erfolgt, wobei im Pulsladebetrieb
(a) in einem ersten Intervall die elektrische Maschine (14) mit einer ersten, hohen elektrischen Leistungsabgabe betrieben wird, die höher als eine aktuelle Leistungsaufnahme des elektrischen Bordnetzes (26) ist, wobei die überschüssige elektrische Leistung zur Aufladung des Energiespeichers (24) verwendet wird, und
(b) in einem zweiten Intervall ausgeschaltet wird; und
wobei vor und während des Pulsladebetriebs eine Wirkungsgradbilanzierung durchgeführt wird, in welcher eine Lastpunktverschiebung des Verbrennungsmotors (12) berücksichtigt wird, welche zur Kompensation einer Lastpunktverschiebung der elektrischen Maschine (14) zwischen dem kontinuierlichen generatorischen Betrieb und dem alternierenden Pulsladebetrieb erfolgt, und der Pulsladebetrieb der elektrischen Maschine (14) nur dann und so lange angewendet wird, wenn ein so ermittelter Wirkungsgradvorteil des alternierenden Betriebs gegenüber dem kontinuierlichen generatorischen Betrieb einen Schwellenwert überschreitet.

2. Verfahren nach Anspruch 1, **dadurch gekennzeichnet, dass** im zweiten Intervall die Versorgung des elektrischen Bordnetzes (26) aus dem Energiespeicher (24) und/oder aus einer Fahrzeugbatterie (30) erfolgt.

3. Verfahren nach Anspruch 1 oder 2, **dadurch gekennzeichnet, dass** das erste Intervall beendet wird, wenn ein Ladezustand (LZ) des Energiespeichers (24) eine obere Umschaltschwelle (LZ_2) erreicht, und das zweite Intervall beendet wird, wenn der Ladezustand (LZ) des Energiespeichers (24) eine untere Umschaltschwelle (LZ_1) erreicht.

4. Verfahren nach Anspruch 3, **dadurch gekennzeichnet, dass** die obere Umschaltschwelle (LZ_2) und/oder die untere Umschaltschwelle (LZ_1) unabhängig voneinander höchstens um 20 %, insbesondere höchstens um 10 %, vorzugsweise höchstens um 5 % bezogen auf einen maximalen Ladezustand des Energiespeichers (24) oberhalb beziehungsweise unterhalb eines Soll-Ladezustands (LZ_S) liegen.

5. Verfahren nach einem der vorhergehenden Ansprüche, **dadurch gekennzeichnet, dass** der alternierende Pulsladebetrieb der elektrischen Maschine (14) angewendet wird, wenn der Wirkungsgradvorteil des alternierenden Betriebs gegenüber dem kontinuierlichen Betrieb mindestens 2 %, vorzugsweise mindestens 5 %, besonders bevorzugt mindestens 10 % beträgt.

6. Kraftfahrzeug mit einer Hybridantriebseinheit (10), welche einen Verbrennungsmotor (12) sowie mindestens eine, wahlweise motorisch oder generatorisch betreibbare elektrische Maschine (14) umfasst, wobei die elektrische Maschine (14) im generatorischen Betrieb einen Energiespeicher (24) lädt und/oder ein elektrisches Bordnetz (26) des Kraftfahrzeugs versorgt, **gekennzeichnet durch** Steuermittel, das zur Ausführung des Verfahrens zur Steuerung eines Betriebs des Kraftfahrzeugs nach einem der Ansprüche 1 bis 5 eingerichtet ist.

## Claims

1. Method for controlling an operation of a motor vehicle having a hybrid drive unit (10) which comprises an internal combustion engine (12) and at least one electric machine (14) which can be optionally operated as a motor or as a generator, wherein in the generator operating mode the electric machine (14) charges an energy store (24) and/or supplies an electrical on-board power system (26) of the motor vehicle, **characterized in that** in the generator operating mode the electric machine (14) is operated as a function of predefined peripheral conditions in a pulse-charging operating mode with alternating intervals or in a continuous generator operating mode, wherein in the pulse-charging operating mode
(a) in a first interval the electric machine (14) is operated with a first, high electric power output which is higher than a current power consumption of the electric on-board power system (26), wherein the excess electric power is used to charge the energy store (24), and
(b) in a second interval it is switched off; and
wherein before and during the pulse-charging operating mode an efficiency level balancing operation is carried out in which a load point shift of the internal combustion engine (12) is taken into account, which efficiency level balancing operation is carried out in order to compensate a load point shift of the electric machine (14) between the continuous generator operating mode and the alternating pulse-charging operating mode, and the pulse charging operating mode of the electric machine (14) is only applied if and only applied as long as an efficiency level advantage, determined in this way, of the alternating operating mode compared to the continuous generating operating mode exceeds a threshold value.

2. Method according to Claim 1, **characterized in that** in the second interval the electrical on-board power system (26) is supplied from the energy store (24) and/or from a vehicle battery (30).

3. Method according to Claim 1 or 2, **characterized in that** the first interval is ended if a state of charge (LZ) of the energy store (24) reaches an upper switch-over threshold (LZ_2), and the second interval is ended if the state of charge (LZ) of the energy store (24) reaches a lower switch-over threshold (LZ_1).

4. Method according to Claim 3, **characterized in that** the upper switch-over threshold (LZ_2) and/or the lower switch-over threshold (LZ_1) are, independently of one another, at maximum 20%, in particular at maximum 10%, preferably at maximum 5% above or below a setpoint state of charge (LZ_S) with respect to a maximum state of charge of the energy store (24).

5. Method according to one of the preceding claims, **characterized in that** the alternating pulse-charging operating mode of the electric machine (14) is applied if the efficiency level advantage of the alternating operating mode compared to the continuous operating mode is at least 2%, preferably at least 5%, particularly preferably at least 10%.

6. Motor vehicle having a hybrid drive unit (10) which comprises an internal combustion engine (12) and at least one electric machine (14) which can be optionally operated as a motor or as a generator, wherein in the generator operating mode the electric machine (14) charges an energy store (24) and/or supplies an electrical on-board power system (26) of the motor vehicle, **characterized by** control means which is configured to carry out the method for controlling an operating of the motor vehicle according to one of Claims 1 to 5.

## Revendications

1. Procédé pour assurer la commande d'exploitation d'un véhicule automobile doté d'une unité d'entraînement hybride (10) comprenant un moteur à combustion interne (12) ainsi qu'au moins un moteur électrique (14) pouvant être entraîné au choix par un moteur ou un générateur, le moteur électrique (14) chargeant dans le mode d'exploitation avec générateur un accumulateur d'énergie (24) et/ou alimentant un réseau de bord électrique (26) du véhicule automobile, **caractérisé en ce que** dans le mode d'exploitation avec générateur, l'actionnement du moteur électrique (14) se produit en fonction de conditions de bord prédéfinies dans une exploitation de charge par impulsion à intervalles alternés ou dans un mode d'exploitation continue avec générateur ; et que dans l'exploitation de charge par impulsion :
(a) au cours d'un premier intervalle, le moteur électrique (14) est entraîné à une première sortie de puissance élevée supérieure à une réception de puissance actuelle du réseau de bord électrique (26), la puissance électrique excédentaire étant utilisée pour charger l'accumulateur d'énergie (24) ; et
(b) une déconnexion est effectuée au cours d'un deuxième intervalle ; et
un bilan de degré d'action étant effectué avant et pendant l'exploitation de charge par impulsion, dans lequel un déplacement du point de charge du moteur à combustion interne (12) est pris en compte, ledit déplacement servant à compenser un déplacement du point de charge du moteur électrique (14) entre l'exploitation continue avec générateur et l'exploitation de charge par impulsion alternée, et l'exploitation de charge par impulsion du moteur électrique (14) étant utilisée seulement lorsque et pendant qu'une prépondérance de degré d'action calculée de l'exploitation alternée dépasse une valeur seuil par rapport à l'exploitation continue avec générateur.

2. Procédé selon la revendication 1, **caractérisé en ce que** pendant le deuxième intervalle, l'alimentation du réseau de bord électrique (26) se produit à partir de l'accumulateur d'énergie (24) et/ou à partir d'une batterie de véhicule (30).

3. Procédé selon la revendication 1 ou 2, **caractérisé en ce que** le premier intervalle prend fin lorsqu'un état de charge (LZ) de l'accumulateur d'énergie (24) atteint un seuil de commutation supérieur (LZ_2) et que le deuxième intervalle prend fin lorsque l'état de charge (LZ) de l'accumulateur d'énergie (24) atteint un seuil de commutation inférieur (LZ_1).

4. Procédé selon la revendication 3, **caractérisé en ce que** le seuil de commutation supérieur (LZ_2) et/ou le seuil de commutation inférieur (LZ_1) se situent indépendamment l'un de l'autre au-dessus et/ou en dessous d'un état de charge théorique (LZ_S), avec un écart de tout au plus 20 %, notamment de tout au plus 10 %, de préférence de tout au plus 5 % par rapport à un état de charge maximal de l'accumulateur d'énergie (24).

5. Procédé selon l'une quelconque des revendications précédentes, **caractérisé en ce que** l'exploitation de charge par impulsion alternée du moteur électrique (14) utilisée lorsque la prépondérance de degré d'action de l'exploitation alternée est d'au moins 2 %, de préférence d'au moins 5 %, de façon particulièrement préférée d'au moins 10 % par rapport à l'exploitation continue.

6. Véhicule automobile doté d'une unité d'entraînement hybride (10) comprenant un moteur à combustion interne (12) ainsi qu'au moins un moteur électrique (14) pouvant être entraîné au choix par un moteur ou un générateur, le moteur électrique (14) chargeant un accumulateur d'énergie (24) dans le mode d'exploitation avec générateur et/ou alimentant un réseau de bord électrique (26) du véhicule automobile, **caractérisé par** des moyens de commande sont conçus pour mettre en oeuvre le procédé permettant d'assurer la commande d'exploitation du véhicule automobile selon l'une quelconque des revendications 1 à 5.
